# EUROPÄISCHE PATENTSCHRIFT

(11) **EP 1 543 872 B1**
(45) Veröffentlichungstag und Bekanntmachung des Hinweises auf die Patenterteilung: **04.10.2006**
(21) Anmeldenummer: 03090428.8
(22) Anmeldetag: 10.12.2003
(51) Int. Cl.: B01D 46/04

(54) **Filtervorrichtung mit einem Filterschlauch und einer Reinigungseinrichtung für den Filterschlauch**
Filter device with a filter hose and a cleaning arrangement for the filter hose
Dispositif de filtration avec un manche de filtration et un dispositif de nettoyage pour le manche de filtration

(43) Veröffentlichungstag der Anmeldung: 22.06.2005
(73) Patentinhaber: Reining, Christian, 48324 Sendenhorst (DE)
(72) Erfinder: Spanner, Stephan, 59227 Ahlen (DE); Reining, Christian, 48324 Sendenhorst (DE)
(74) Vertreter: Meissner, Peter E.

(56) Entgegenhaltungen:
- EP-A- 0 065 094
- DE-A- 3 920 097
- GB-A- 1 184 784
- GB-A- 2 293 333
- US-A- 5 182 832

## Beschreibung

Die vorliegende Erfindung betrifft eine Filtervorrichtung mit wenigstens einem Filterschlauch zwischen einer Rohgasseite und einer Reingasseite, wobei jeder Filterschlauch einen Schlauchkörper mit einer Längsachse und einem ersten Ende mit einer Schlauchöffnung aufweist, und mit einer Reinigungseinrichtung zum Reinigen des Filterschlauchs, die eine Mehrzahl von Düsen aufweist, deren Betätigung die Reinigungseinrichtung in Drehung versetzt, wobei die Reinigungseinrichtung während einer Betätigung der Düsen in Längsrichtung jedes Filterschlauchs bewegbar ist.

Aus GB 1 184 784 A ist eine Reinigungseinrichtung zum Reinigen eines Filtersiebes, also eines "harten" Filterelements, bekannt. Die Abreinigung erfolgt durch Abspülen der Innenflächen des Filtersiebes mittels einer rotierenden Düseneinrichtung. Die Düseneinrichtung gibt einen Wasserstrahl zur Reinigung des Filtersiebes ab.

Eine ähnliche Filtervorrichtung ist aus DE 39 20 097 A1 zur Reinigung von Filterpatronen bekannt. Solche Filterpatronen sind aus einem plissierten Filtermaterial gefertigt, d.h., steif gemacht und gefaltet. Das Reinigungsgas trifft innen auf das Filtermaterial und schlägt Verunreinigungen davon mechanisch ab.

Für eine solche Reinigung sind Reinigungsverfahrenwie z.B. aus GB 1 184 784 A, bekannt. Ein solches Verfahren des Standes der Technik besteht darin, oberhalb eines Filterschlauchs eine Düse anzuordnen, durch die ein sogenannter "Jetpuls" schräg zu einer Längsachse in den Filterschlauch geleitet wird, so dass sich der Schlauchkörper in eine Wellenbewegung oder Vibration versetzt. Damit soll der Filterkuchen vom Schlauchkörper abgeschüttelt werden. Ein solcher Jetpuls erfolgt unkontrolliert, so dass die Reinigung nicht an allen Schlauchteilen zufriedenstellend erfolgt.

Eine weitere Möglichkeit des Standes der Technik besteht darin, eine Düsenlanze in den Schlauchkörper einzuführen. Mit einer solchen Düsenlanze werden Schlauchkörper regelmäßig verletzt, z.B. zerschnitten, so dass aufwändige Arbeitsgänge erforderlich sind, um den Filterschlauch durch einen neuen zu ersetzen.

Die Düseneinrichtung aus GB 1 184 784 weist, zur Abreinigung relativ langer Filterschläuche eine Reihe von Düsenköpfen entlang einer Achse der Düseneinrichtung auf, um die Länge des Filterschlauches in mehrere gleichzeitig oder getrennt zu reinigende Längsabschnitte zu unterteilen.

Aus der US-A-5,182,832 ist eine Reinigungseinrichtung für einen Papier-Luftfilter in einem Verbrennungsmotor bekannt, bei der eine Düseneinrichtung zentral in dem ringförmigen Luftfilter angeordnet wird und Druckluft radial nach außen auf das Filterpapier abgibt.

Die dritte Variante zur Reinigung eines solchen Filterschlauches besteht darin, den Filterschlauch auszubauen und entweder trocken oder nass in einem Reinigungsunternehmen reinigen zu lassen

Alle vorher genannten Verfahren für Filterschläuche sind unbefriedigend, da sie entweder nicht sorgfältig genug arbeiten, kostenintensiv oder technisch aufwändig sind.

Die Aufgabe der vorliegenden Erfindung ist daher, eine Filtervorrichtung der eingangs genannten Art zu schaffen, die eine einwandfreie Abreinigung der sich auf einem Filterschlauch absetzenden Filterdeckschicht gewährleistet.

Die Aufgabe wird dadurch gelöst, dass die Reinigungseinrichtung in Längsrichtung jedes Filterschlauchs bewegbar angeordnet ist und eine Mehrzahl von Düsen zur Abgabe eines Druckfluids aufweist, wobei eine Betätigung der Düsen die Reinigungseinrichtung in eine Drehbewegung um eine Achse parallel zur Längsachse versetzt. Die Reinigungseinrichtung erzeugt während der Betätigung der Düsen eine Druckwelle in dem Schlauchkörper die sich von der Schlauchöffnung zu einem freien Ende des Schlauchkörpers fortsetzt.

Mit der erfindungsgemäßen Filtervorrichtung ist eine zuverlässige Reinigung eines Filterschlauchs gewährleistet. Die Reinigungseinrichtung kann z.B. die Form eines Düsenkopfes aufweisen, der in einem Filterschlauch oder neben einem Filterschlauch, parallel zu diesem, bewegt wird. Durch die Abgabe eines Druckfluids an einer in Längsrichtung bestimmten Position wird jeder Bereich des Schlauchkörpers sicher erreicht und eine mechanische Verletzung des Schlauchkörpers vermieden.

Weitere Vorteile der vorliegenden Erfindung ergeben sich aus den Merkmalen der Unteransprüche 2 bis 8.

Eine Ausführungsform der vorliegenden Erfindung wird im Folgenden anhand der Zeichnungen näher beschrieben. Es zeigen:
- Fig. 1: eine schematische Ansicht im Längsschnitt einer Filtervorrichtung mit einer in einem Filterschlauch geführten Reinigungseinrichtung;
- Fig. 2: eine Draufsicht auf eine Gruppe von Filterschläuchen mit mehreren Reinigungseinrichtungen.
- Fig. 3: eine schematische Darstellung eines Düsenkopfes mit Aufnahmen zur variablen Anordnung von Düsen gemäß vorliegender Erfindung;
- Fig. 4a: schematische Seitenansicht einer ersten Version einer variablen Düse;
- Fig. 4b: schematische Draufsicht auf die variable Düse aus Fig. 4a mit einem Rundloch als Düsenöffnung;
- Fig. 5a: schematische Seitenansicht einer zweiten Version einer variablen Düse;
- Fig. 5b: schematische Draufsicht auf die variable Düse aus Fig. 5a mit einem Rundloch als Düsenöffnung;
- Fig. 6a: schematische Seitenansicht einer zweiten Version einer variablen Düse;
- Fig.: 6b schematische Draufsicht auf die variable Düse aus Fig. 6a mit einem Langloch als Düsenöffnung;
- Fig. 7: schematische Seitenansicht des Düsenkopfes mit einer Gitterblende.

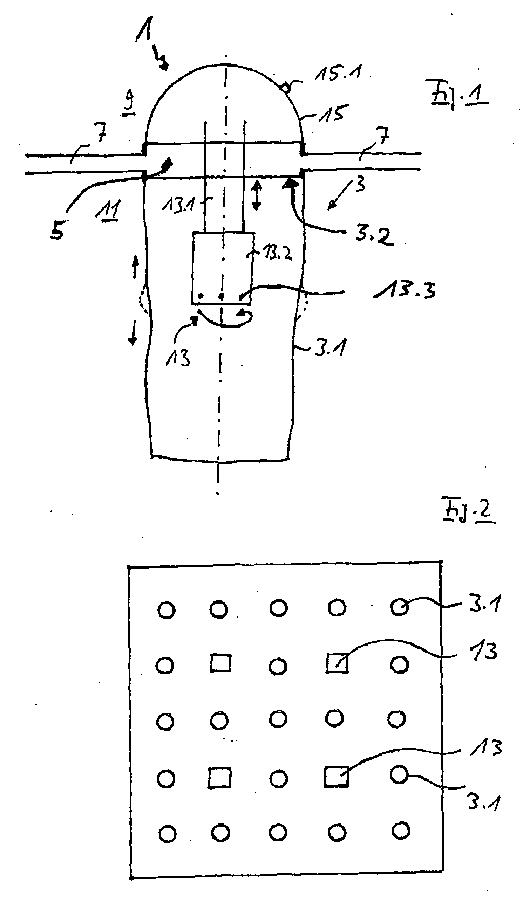

In Fig. 1 ist schematisch im Längsschnitt eine Filtervorrichtung 1 dargestellt. Die Filtervorrichtung 1 umfaßt einen Filterschlauch, der mit seinem Schlauchkörper 3.1 bzw. Schlauchmantel in einer Öffnung 5 einer Kopfplatte 7 eingespannt ist. Durch diese Festlegung ergibt sich eine Schlauchöffnung 3.2 über im wesentlichen den gesamten Querschnitt des aufgespannten Schlauchkörpers 3.1. In Fig. 1 befindet sich oberhalb der Kopfplatte 7 eine sogenannten Reingasseite 9, und unterhalb der Kopfplatte 7 befindet sich die sogenannte Rohgasseite 11.

Durch die Schlauchöffnung 3.2 hängt schwebend eine Reinigungseinrichtung 13 in den Schlauchkörper 3.1 hinein. In anderen Ausführungsformen kann die Reinigungseinrichtung 13 auch von der Rohgasseite aus bzw. von unten eingeführt sein. Die Reinigungseinrichtung 13 umfaßt im wesentlichen eine stangenförmige Halterung 13.1 und an einem in den Schlauchkörper 3.1 ragenden freien Ende einen Düsenkopf 13.2. Auf dem Düsenkopf 13.2 befindet sich eine Mehrzahl von Düsen 13.3, die in Bezug zum Düsenkopf 13.2 tangential angeordnet sind und den Düsenkopf 13.2 an dem stangenförmigen Element 13.1 oder aber den Düsenkopf 13.2 zusammen mit dem stangenförmigen Element 13.1 in Drehung versetzen, wenn ein Druckfluid aus den Düsen 13.3 abgegeben wird. Die Drehrichtung ist mit einem Pfeil schematisch dargestellt.

In weiteren Ausführungsformen ist der Düsenkopf 13.2 in Düsenringe (nicht dargestellt) unterteilt, wobei die tangentiale Ausrichtung der Düsen 13.3 auf benachbarten Düsenringen entgegengesetzt oder gleichgerichtet ist. Bei Austritt eines Druckfluids aus den Düsen 13.3 werden dadurch die jeweiligen Düsenringen in entgegengesetzte Richtungen gedreht.

In der in Fig. 1 dargestellten Situation tritt ein gasförmiges Druckfluid, z.B. Druckluft, aus den Düsen 13.3 aus. Durch den Austritt von Druckluft aus den Düsen 13.3 wird auf die Innenwand des Schlauchkörpers 3.1 ein Druck ausgeübt, der den Schlauchkörper 3.1 nach außen wölbt. Die Reinigungseinrichtung 13 hat eine Längsachse, die in etwa mit einer Längsachse des gespannten Schlauchkörpers 3.1 zusammen fällt oder parallel zu dieser verläuft. Die Reinigungseinrichtung 13 ist auf dieser Längsachse über die gesamte Länge des Schlauchkörpers 3.1 bewegbar angeordnet, so dass diese hin und her bewegt werden kann. Wenn das Druckfluid bzw. die Druckluft aus den Düsen 13.3 austritt. Während sich die Reinigungseinrichtung 13 in Längsrichtung bewegt, wird in dem Schlauchkörper 3.1 eine kontrollierte Druckwelle erzeugt, die sich entsprechend von oben, das heißt, von der Einspannung des Schlauchkörpers an der Kopfplatte 7, nach unten, das heißt, zum freien Ende des Filterschlauchs 3 hin, fortsetzt. In Abhängigkeit von der Anzahl von Düsen 13.3 in einer horizontalen Ebene setzen sich gleichzeitig Wellenbewegungen konzentrisch im Umfangsbereich des durch die Druckluft beaufschlagten Schlauchkörpers 3.1 fort.

In Abhängigkeit von der Geschwindigkeit der Drehung des Düsenkopfes 13.2 bzw. der Düsenringe (nicht dargestellt) und in Abhängigkeit von der Anzahl der Düsen 13.3 wird die Wellenbewegung zu einer kontrollierten Vibration, mit welcher ein auf der Außenseite des Schlauchkörpers 3.1 anhaftendes Filtergut abgeschüttelt werden kann.

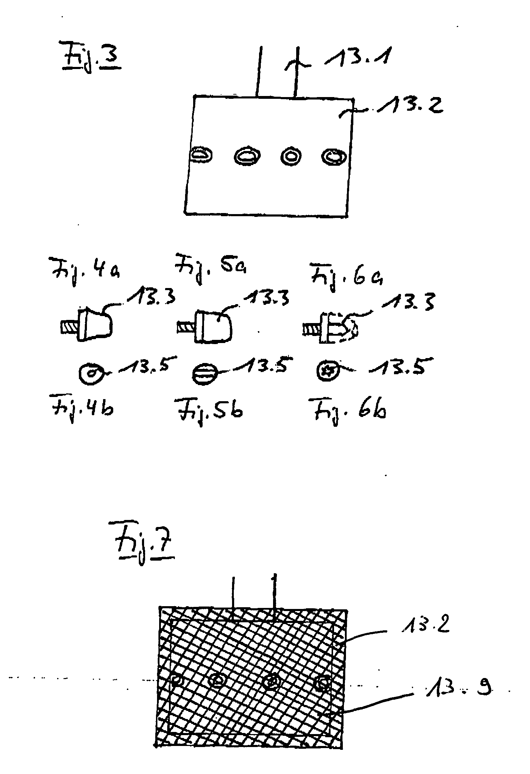

Auf der Reingasseite 9 ist über der Schlauchöffnung 3.2 optional eine Glocke 15 ausgebildet, die einen Anschluss15.1 zum Absaugen von Innenstaub aufweist. Die Reinigungsvorrichtung 13 kann auch mit einem flüssigen Druckfluid betrieben werden. Bei dieser Betriebsweise wird die Reinigungseinrichtung nicht in einem Schlauchkörper 3.1 angeordnet und in Längsrichtung bewegt, sondern neben einem Schlauchkörper 3.1. In Fig. 2 ist eine Draufsicht von einer Gruppe von Filterschläuchen 3 mit Schlauchkörpern 3.1 dargestellt. Es können einer solchen Gruppe von Filterschläuchen 3 auch einzelne Filterschläuche entnommen werden und durch jeweils eine Reinigungseinrichtung ersetzt werden. In praktischer Weise werden zentrale Filterschläuche 3 entnommen, so dass die statt dessen eingesetzten Reinigungseinrichtungen 13 von verbleibenden Filterschläuchen 3 umgeben sind. Die Reinigungseinrichtungen 13 werden dann in der vorbeschriebenen Art und Weise in Längsrichtung bewegt und mit einem flüssigen oder gasförmigen Druckfluid getrieben, derart, dass sich der Düsenkopf 13.2 in Drehung versetzt. Auch bei dieser Anwendung können in anderen Ausführungsformen Düsenringe mit entgegengesetzter oder gleicher Drehrichtung mit gleicher oder unterschiedlicher Drehzahl verwendet werden. In dieser Weise können die umliegenden Schlauchkörper 3.1 mit dem flüssigen Druckfluid gewaschen werden.

In Fig. 3 ist eine schematische Darstellung eines Düsenkopfes mit Aufnahmen 13.4 zur variablen Anordnung der Düsen 13.3 dargestellt. Die Düsen 13.3 weisen ein Aussengewinde 13.7 auf, mit welchem diese in einem Innengewinde 13.6 der Aufnahmen 13.4 festlegbar sind.

In Fig. 4a ist schematisch eine Seitenansicht einer ersten Version einer variablen Düse 13.3 dargestellt. In Fig. 4b ist schematisch eine Draufsicht auf die variable Düse aus Fig. 4a mit einem Rundloch als Düsenöffnung 13.5 dargestellt.

In Fig. 5a ist schematisch eine Seitenansicht einer zweiten Version einer variablen Düse 13.3 dargestellt. Fig. 5b ist eine schematische Draufsicht auf die variable Düse 13.3 aus Fig. 5a mit einem Langloch als Düsenöffnung 13.5 dargestellt.

In Fig. 6a ist schematisch eine Seitenansicht einer dritten Version einer variablen Düse 13.3 dargestellt. In Fig. 6b ist schematisch eine Draufsicht auf die variable Düse 13.3 aus Fig. 6a mit einem Dorn als Düsenöffnung 13.5 dargestellt.

In Fig. 7 ist schematisch eine Seitenansicht des Düsenkopfes 13.2 mit einer Gitterblende 13.9 dargestellt.

## Patentansprüche

1. Filtervorrichtung mit wenigstens einem Filterschlauch (3) zwischen einer Rohgasseite und einer Reingasseite, wobei jeder Filterschlauch (3) einen Schlauchkörper mit einer Längsachse und einem ersten Ende mit einer Schlauchöffnung (3.2) aufweist, und mit einer Reinigungseinrichtung (13) zum Reinigen des Filterschlauchs (3), die einen Düsenkopf (3.2) mit einer Mehrzahl von Düsen (13.3) aufweist, deren Betätigung die Reinigungseinrichtung (13) in Drehung versetzt, **dadurch gekennzeichnet,**
**dass** die Reinigungseinrichtung (13) während der Betätigung der Düsen (13.3) in Längsrichtung jedes Filterschlauchs (3) bewegbar ist und eine Druckwelle in dem Schlauchkörper (3.1) erzeugt, die sich von der Schlauchöffnung (3.2) zu einem freien Ende des Schlauchkörpers (3.1) fortsetzt.

2. Filtervorrichtung nach Anspruch 1,
**dadurch gekennzeichnet,**
**dass** die Düsen (13.3) mit Düsenöffnungen (13.5) ausgewählt aus der Gruppe bestehend aus Rundloch, Langloch, Dorn mit variabler Geometrie ausgebildet sind.

3. Filtervorrichtung nach Anspruch 1 oder 2,
**dadurch gekennzeichnet,**
**dass** der Düsenkopf (13.2) mehrere Aufnahmen (13.4) mit Innengewinde (13.6) aufweist, an denen jeweils eine Düse (13.3) mit einem Außengewinde (13.7) festlegbar ist.

4. Filtervorrichtung nach einem der vorstehenden Ansprüche,
**dadurch gekennzeichnet,**
**dass** die Reinigungseinrichtung (13) durch die Schlauchöffnung (3.2) in den Filterschlauch (3) eingreift und über dessen Länge hin und her bewegbar ist.

5. Filtervorrichtung nach einem der vorstehenden Ansprüche,
**dadurch gekennzeichnet,**
**dass** die Reinigungseinrichtung (13) zwischen einer Gruppe von Filterschläuchen (3) in Längsrichtung hin und her bewegbar ist.

6. Filtervorrichtung nach einem der vorstehenden Ansprüche,
**dadurch gekennzeichnet,**
**dass** die Düsen (13.3) tangential zur Reinigungseinrichtung (13) angeordnet sind.

7. Filtervorrichtung nach einem der Ansprüche der vorstehenden Ansprüche,
**dadurch gekennzeichnet,**
**dass** am Düsenkopf (13.2) eine Gitterblende (13.9) angeordnet ist.

## Claims

1. A filter device with at least one filter hose (3) between a raw-gas side and a clean-gas side, wherein each filter hose (3) has a hose body with a longitudinal axis and a first end with a hose opening (3.2), and with a cleaning arrangement (13) for cleaning the filter hose (3), which cleaning arrangement (13) has a nozzle head (13.2) with a plurality of nozzles (13.3), the operation of which sets the cleaning arrangement (13) into rotation, **characterised in that**, during operation of the nozzles (13.3), the cleaning arrangement (13) is movable in the longitudinal direction of each filter hose (3) and generates in the hose body (3.1) a pressure wave which extends from the hose opening (3.2) to a free end of the hose body (3.1).

2. A filter device according to claim 1, **characterised in that** the nozzles (13.3) are formed with variable geometry with nozzle openings (13.5) selected from the group consisting of round hole, slot, mandrel.

3. A filter device according to claim 1 or 2, **characterised in that** the nozzle head (13.2) has a plurality of mounts (13.4) with an internal thread (13.6), to each of which a nozzle (13.3) with an external thread (13.7) is securable.

4. A filter device according to any one of the preceding claims, **characterised in that** the cleaning arrangement (13) extends through the hose opening (3.2) into the filter hose (3) and is movable in a reciprocating manner over the length thereof.

5. A filter device according to any one of the preceding claims, **characterised in that** the cleaning arrangement (13) is movable in a reciprocating manner in the longitudinal direction between a group of filter hoses (3).

6. A filter device according to any one of the preceding claims, **characterised in that** the nozzles (13.3) are arranged tangentially to the cleaning arrangement (13).

7. A filter device according to any one of the preceding claims, **characterised in that** a mesh screen (13.9) is arranged on the nozzle head (13.2).

## Revendications

1. Dispositif de filtration muni d'au moins un tuyau filtrant (3) entre un côté gaz brut et un côté gaz purifié, chaque tuyau filtrant (3) présentant un corps de tuyau comportant un axe longitudinal et une première extrémité pourvue d'une ouverture de tuyau (3.2), et muni d'un dispositif de nettoyage (13) destiné à nettoyer le tuyau filtrant (3), lequel dispositif de nettoyage présente une tête de buses (13.2) comportant un grand nombre de buses (13.3) dont l'actionnement fait tourner le dispositif de nettoyage (13),
**caractérisé en ce que**, pendant l'actionnement des buses (13.3), le dispositif de nettoyage (13) est mobile dans le sens longitudinal de chaque tuyau filtrant (3) et produit dans le corps de tuyau (3.1) une onde de pression qui se propage depuis l'ouverture de tuyau (3.2) vers une extrémité libre du corps de tuyau (3.1).

2. Dispositif de filtration selon la revendication 1,
**caractérisé en ce que** les buses (13.3) ont une géométrie variable avec des ouvertures de buse (13.5) choisies parmi le groupe constitué de trous ronds, de trous oblongs, de broches.

3. Dispositif de filtration selon la revendication 1 ou 2,
**caractérisé en ce que** la tête de buses (13.2) présente plusieurs logements (13.4), munis d'un filetage intérieur, sur chacun desquels peut être fixée une buse (13.3) munie d'un filetage extérieur (13.7).

4. Dispositif de filtration selon l'une des revendications précédentes,
**caractérisé en ce que** le dispositif de nettoyage (13) pénètre par l'ouverture de tuyau (3.2) dans le tuyau filtrant (3) et peut se déplacer dans un mouvement de va-et-vient sur sa longueur.

5. Dispositif de filtration selon l'une des revendications précédentes,
**caractérisé en ce que** le dispositif de nettoyage (13) peut se déplacer dans un mouvement de va-et-vient dans le sens longitudinal entre un groupe de tuyaux filtrants (3).

6. Dispositif de filtration selon l'une des revendications précédentes,
**caractérisé en ce que** les buses (13.3) sont agencées de façon tangentielle par rapport au dispositif de nettoyage (13).

7. Dispositif de filtration selon l'une des revendications précédentes,
**caractérisé en ce qu'**un écran en treillis (13.9) est agencé sur la tête de buses (13.2).
